# EUROPEAN PATENT SPECIFICATION

(11) **EP 2 093 112 B1**
(45) Date of publication and mention of the grant of the patent: **23.12.2015**
(21) Application number: 08425108.1
(22) Date of filing: 21.02.2008
(51) Int. Cl.: B60T 7/12, B60T 11/21, B62D 11/08

(54) **Electronically controlled brake apparatus for tractors**
Elektronisch gesteuerte Bremsvorrichtung für Traktoren
Appareil de freinage à contrôle électronique pour tracteurs

(43) Date of publication of application: 26.08.2009
(73) Proprietor: CNH Industrial Italia S.p.A., 10135 Torino (IT)
(72) Inventor: Canuto, Francesco, 10126 Torino (IT); Frediani, Salvatore, 11100 Aosta (IT); Sedoni, Enrico, 41100 Modena (IT)
(74) Representative: CNH Industrial IP Department

(56) References cited:
- DE-C1- 10 029 819
- US-A- 3 129 035

## Description

The present invention relates to an electronically controlled brake apparatus for tractors.

A major problem with tractors, and one also commonly encountered by ordinary motorists, is that, to prevent back-rolling of the tractor by force of gravity when braked uphill, the driver is forced to use the handbrake or adopt other awkward measures, such as accelerating slightly to compensate the backward pull induced by force of gravity.

US-A-3,129,035 discloses a device for braking either rear wheel by means of a lever. Rotating the lever in a first direction activates a distributor valve supplying high pressure to a three way automatic valve connected to a brake cylinder of one of the rear wheels. Rotating the lever in second direction provides high pressure to the other rear wheel through a further three way valve. When the lever is in the central position normal braking of the vehicle can be effected.

DE 100 29 819 C1 discloses an electronically controlled brake system which enables a steer by brake function based on the rotation of the steering wheel above a certain threshold, as long as a certain speedlimit is not exceeded.

The present invention is designed to provide a straightforward solution to the above problem, by means of an automatic uphill parking apparatus requiring no use of the handbrake or other awkward measures.

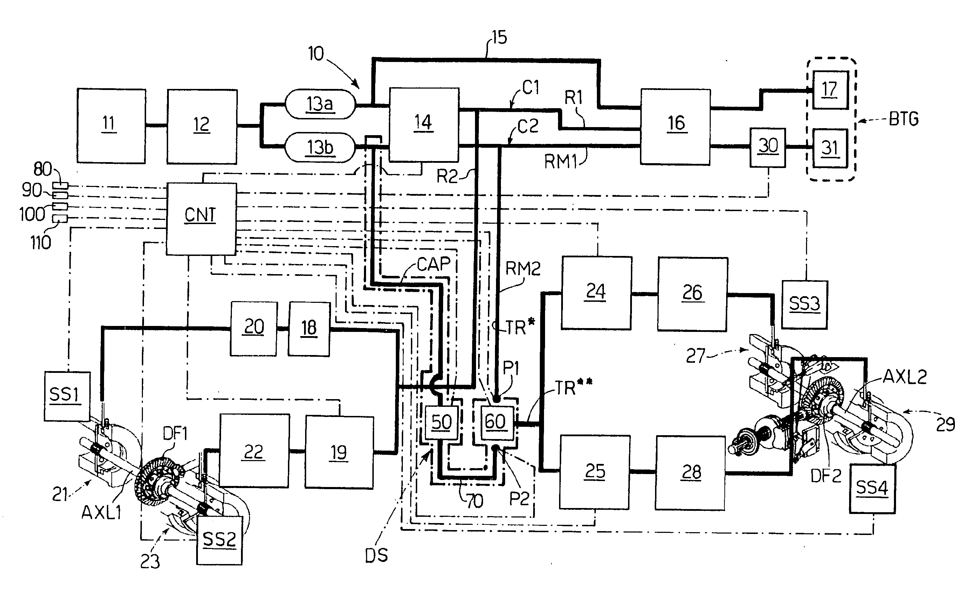

A non-limiting embodiment of the present invention will be described by way of example with reference to the attached drawing.

Number 10 in the attached drawing indicates as a whole an electronically controlled brake apparatus, in particular for tractors, in accordance with the present invention.

Apparatus 10 comprises a compressor 11 for supplying compressed air to an air-processing - substantially air-dehumidifying - unit 12.

The processed air is stored in two parallel tanks 13a, 13b, both connected pneumatically to a pedal arrangement 14 which provides for normal braking or steer-by-braking (SBF).

As is known, with this type of pedal arrangement 14, when the driver presses the left (or right) pedal only, the brake apparatus only brakes the rear left (or right) wheel, thus reducing the turn radius of the tractor, especially during headland manoeuvres.

A circuit 15 is connected to tank 13a to feed high-pressure (e.g. 8-bar) air to a brake valve 16 of a trailer (not shown) and to a high-pressure coupling 17 forming part of an assembly BTG for connecting a trailer brake apparatus (neither shown).

As shown in the attached drawing, a first adjustable low-pressure air circuit C1 and a second adjustable low-pressure air circuit C2 originate from pedal arrangement 14.

First circuit C1 comprises two branches R1, R2, of which a first branch R1 connects pedal arrangement 14 pneumatically to the trailer brake valve 16, and a second branch R2 connects pedal arrangement 14 pneumatically to two front ABS modulators 18, 19.

ABS modulator 18 regulates compressed-air supply to a corresponding pneumatic/hydraulic converter 20, which converts the incoming energy, in the form of compressed air, to hydraulic energy to power a corresponding front right brake 21 of a front right wheel (not shown) fitted to an axle AXL1 with a conventional differential DF1.

Likewise, ABS modulator 19 regulates compressed-air supply to a corresponding pneumatic/hydraulic converter 22, which converts the incoming energy, in the form of compressed air, to hydraulic energy to power a corresponding front left brake 23 of a front left wheel (not shown) also fitted to axle AXL1.

A speed sensor SS1 and speed sensor SS2 are provided for determining the speed of the front right wheel and front left wheel respectively.

ABS modulators 18, 19 and front-wheel speed sensors SS1, SS2 are connected electrically to an electronic central control unit CNT for the reasons explained below.

Second circuit C2 comprises two branches RM1 and RM2.

Like branch R1 of circuit C1, a first branch RM1 connects pedal arrangement 14 pneumatically to valve 16; and the second branch RM2 connects pedal arrangement 14 pneumatically to two rear ABS modulators 24, 25.

ABS modulator 24 regulates compressed-air supply to a corresponding pneumatic/hydraulic converter 26, which converts the incoming energy, in the form of compressed air, to hydraulic energy to power a corresponding rear right brake 27 of a rear right wheel (not shown) fitted to an axle AXL2 with a conventional differential DF2.

Likewise, ABS modulator 25 regulates compressed-air supply to a corresponding pneumatic/hydraulic converter 28, which converts the incoming energy, in the form of compressed air, to hydraulic energy to power a corresponding rear left brake 29 of a rear left wheel (not shown) also fitted to axle AXL2.

A speed sensor SS3 and speed sensor SS4 are provided for determining the speed of the rear right wheel and rear left wheel respectively.

ABS modulators 24, 25 and rear-wheel speed sensors SS3, SS4 are also connected electrically to electronic central control unit CNT.

Between valve 16 and assembly BTG (more specifically, between valve 16 and a fitting 31 forming part of assembly BTG) is interposed an electric valve 30, through which flows the adjustable low-pressure compressed air flowing along first branch RM1 of circuit C2 to assembly BTG.

Electric valve 30 is a normally-open type controlled by electronic central control unit CNT.

Apparatus 10 according to the present invention operates as follows:
**(A)** To simply brake the tractor and trailer (if any), the driver acts accordingly on pedal arrangement 14; compressed air, adjustable according to driver operation of pedal arrangement 14, is supplied simultaneously to the four ABS modulators, thus initiating braking of all four wheels, which is regulated electronically by electronic central control unit CNT using ABS logic.
**(B)** To simply brake the tractor towing a trailer, electric valve 30 is open, and so permits adjustable-air flow to assembly BTG.
**(C)** Conversely, to implement the steer-by-braking function (SBF) using pedal arrangement 14, since nothing is gained - in fact, driver safety is even jeopardized - by also involving the trailer, electronic central control unit CNT closes electric valve 30 to cut off adjustable-air supply to assembly BTG.
(D) The four wheel speeds detected by sensors SS1, SS2, SS3, SS4 and transmitted to electronic central control unit CNT obviously also play their part in controlling both normal braking of the four wheels (with electric valve 30 open), and steer-by-braking (SBF) (with electric valve 30 closed) of either the rear right wheel by brake 27, or the rear left wheel by brake 29, depending on the desired turn direction.

Apparatus 10 also comprises a line CAP, which starts immediately downstream from tank 13b and feeds high-pressure air to a normally-closed valve 50. Valve 50 is connected electrically to electronic central control unit CNT, and may be either an ON/OFF or gradually opened type (see below).

Branch RM2 is fitted with a comparing valve 60 connected pneumatically to valve 50 by a line 70.

More specifically, comparing valve 60 divides branch RM2 into two portions TR* and TR**.

As will be seen in the operating description of apparatus 10 below, comparing valve 60 determines the instantaneous air pressure at a point P1 along portion TR* and a point P2 along line 70, compares the pressures at points P1 and P2, and opens on the higher-pressure side.

In other words, if comparing valve 60 detects a higher pressure at point P2 than at point P1, it opens on the line 70 side to connect line 70 to portion TR**. Conversely, if comparing valve 60 detects a higher pressure at point P1 than at point P2, it opens on the portion TR* side to connect portion TR* to portion TR**.

Comparing valve 60 and points P1 and P2 are also connected electrically to electronic central control unit CNT.

Line CAP, valve 50, line 70, and comparing valve 60 form a device DS for supplying high-pressure air, and selecting the maximum pressure of the air supply, to rear modulators 24, 25.

Electronic central control unit CNT is also connected electrically to an acceleration sensor 80, which, even when the tractor is stationary uphill, detects negative acceleration (with respect to the travelling direction of the tractor) caused by gravity which, as is known, tends to pull the tractor in reverse.

Electronic central control unit CNT is also connected electrically to a tractor speed sensor 90; a sensor 100 connected to the accelerator pedal (not shown); and a travelling direction sensor 110 (forward (F) or reverse (B)).

Apparatus 10 according to the present invention operates as follows:
**(E)** When the tractor is stopped uphill (e.g. by a red light), this is detected by acceleration sensor 80, which accordingly transmits a signal to electronic central control unit CNT. (Alternatively, reverse movement with a forward gear engaged may be detected).
**(F)** Electronic central control unit CNT therefore transmits a signal to normally-closed valve 50, which opens to set line 70 to high pressure (e.g. of 8 bars).
**(G)** On comparing the pressures at points P1 and P2 and determining a higher pressure at point P2 than at point P1 (because pedal arrangement 14 is not pressed by the driver, so circuits C1 and C2 are discharged), comparing valve 60 connects line 70 to portion TR** to feed high-pressure air to modulators 24, 25.
**(H)** Converters 26, 28 therefore activate rear brakes 27, 29, which act as parking brakes.
**(I)** When the driver presses the accelerator pedal, sensor 100 transmits a signal to central control unit CNT, which electronically closes valve 50 to discharge modulators 24, 25.
**(L)** At this point, the pressure at point P2 falls to zero, so that the pressure at point P1 is higher than at point P2, and comparing valve 60 reconnects portions TR* and TR** of branch RM2 and disconnects line 70 from portion TR**, thus restoring the original braking apparatus.

Though the above description with reference to the attached drawing refers to a particular electronic apparatus employing ABS logic, the teachings of the present invention also apply to any electronically controlled brake apparatus, such as the brake-by-wire apparatus.

Similarly, though the above description refers to an apparatus comprising four ABS modulators, the teachings of the present invention may also be applied to three-channel apparatuses (i.e. with two ABS modulators for the rear wheels, and one ABS modulator for both the front wheels), or even to two-channel apparatuses (i.e. with only two ABS modulators for the rear wheels).

The apparatus according to the present invention provides for the following functions:
(1) ABS electronic braking;
(2) Electronic steer-by-braking (e-SBF);
(3) Yaw moment control (YMC);
(4) Cornering brake control (CBC) for stabilizing and preventing the tractor from swerving when braking around bends; this control operates with no intervention on the part of the ABS apparatus;
(5) Dynamic drift control (DDC) for stabilizing the vehicle when braking around bends, and preventing swerving during intervention of the ABS apparatus;
(6) Electronic brake distribution (EBD) to avoid damaging the clutch;
(7) Autonomous steer-by-braking function (ASBF). In this case, when the driver turns the steering wheel, the electronic steer-by-braking function (e-SBF) is activated automatically to assist steering with no direct intervention by the driver on the brake pedals; electronic central control unit CNT opens valve 50 and simultaneously discharges modulator 24 to turn left; and, at the same time, high pressure is supplied from valve 50 to brake 29 via modulator 25. The same also applies when the driver makes a right turn.
(8) Hill holder (HH). As already described, this function provides for automatically keeping the tractor braked uphill, without using the handbrake.
(9) Traction control apparatus (ASR). This function is engaged automatically when the driver, for example, accelerates on muddy ground, and one wheel starts spinning. When the ASR function is engaged, the apparatus automatically only brakes the spinning wheel to transfer torque to the wheel on solid ground. If the left wheel is spinning, electronic central control unit CNT opens valve 50 and simultaneously discharges modulator 24; at the same time, high pressure is supplied from valve 50 to brake 29 via modulator 25, so that the left wheel is braked and stops spinning, thus improving traction of the right wheel. This also prevents over-revving of the tractor engine, and ensures more power to the wheel with traction.

The advantages of the present invention are as follows:
- uphill re-starting of the tractor no longer requires use of the handbrake;
- the ASBF function simplifies manoeuvring in confined spaces, without the driver having to operate the brake pedals; and
- the ASR function improves traction over rough ground, without the driver having to engage the differential lock.

## Claims

1. An electronically controlled brake apparatus (10) for tractors; the apparatus (10) comprising:
- means (11, 12, 13a, 13b, 15, C1, C2) for producing and distributing compressed fluid;
- means (14) for braking and steer-by-braking (SBF) the tractor; and
- compressed-fluid modulators (18, 19, 24, 25) for activating the tractor brakes (21, 23, 27, 29); said modulators (18, 19, 24, 25) being connected electrically to a brake-control electronic central control unit (CNT);
and the apparatus (10) being **characterized by** also comprising:
- an uphill stop detector (80, 90, 110) coupled to the electronic central control unit (CNT), and
- a device (DS) for supplying high-pressure fluid to the rear modulators (24, 25), the device (DS) being coupled to the electronic central control unit (CNT) and being configured to select the maximum pressure of the fluid supply to the rear modulators (24, 25) when the means (14) for braking is not pressed and the uphill stop detector (80, 90, 110) detects that the tractor is stopped uphill.

2. An apparatus (10) as claimed in Claim 1, **characterized in that** said device (DS) comprises a first line (CAP), a normally-closed valve (50), a second line (70), and a comparing valve (60).

3. An apparatus (10) as claimed in Claim 2, **characterized in that** said comparing valve (60) divides a branch (RM2) into a first and second portion (TR*, TR**); said comparing valve (60) determining the instantaneous fluid pressure at a first point (P1) along the first portion (TR*), and the instantaneous fluid pressure at a second point (P2) along the second line (70); said comparing valve (60) comparing the pressures at the first and second points (P1, P2), and opening on the side of the higher of the two pressures; that is, on determining a higher pressure at the second point (P2) that at the first point (P1), the comparing valve (60) opens on the side of the second line (70) to connect the second line (70) to the second portion (TR**); and, conversely, on determining a higher pressure at the first point (P1) than at the second point (P2), the comparing valve (60) opens on the side of the first portion (TR*) to connect the first portion (TR*) to the second portion (TR**).

4. An apparatus (10) as claimed in any one of the foregoing Claims, **characterized in that** said modulators (18, 19, 24, 25) act on pneumatic/hydraulic converting means (20, 22, 26, 28) which convert the incoming energy, in the form of compressed air, to hydraulic energy to power corresponding brakes (21, 23, 27, 29).

5. An apparatus (10) as claimed in any one of the foregoing Claims, **characterized by** comprising further means (16, 30, BTG) for braking a trailer only; said further means (16, 30, BTG) comprising normally-ON valve means (30) normally allowing simultaneous braking of the tractor and trailer; said valve means (30) being controlled by said electronic central control unit (CNT) to switch to OFF when the steer-by-braking function (SBF) is activated.

6. An apparatus (10) as claimed in any one of the foregoing Claims, **characterized in that** said electronic central control unit (CNT) controls said modulators (18, 19, 24, 25).

7. An apparatus (10) as claimed in any one of the foregoing Claims, **characterized in that** said electronic central control unit (CNT) acquires and process signals indicating the instantaneous speeds of the tractor wheels.

8. An apparatus (10) as claimed in Claim 7, **characterized in that** said signals indicating the instantaneous speeds of the tractor wheels are supplied by a number of sensors (SS1, SS2, SS3, SS4), each located at a respective wheel.

9. An apparatus (10) as claimed in any one of the foregoing Claims, **characterized in that**:
- said means (14) for braking the tractor and trailer, and for steer-by-braking (SBF) the tractor only; and
- said compressed-fluid modulators (18, 19, 24, 25) acting on said converting means (20, 22, 26, 28) and for activating tractor brakes (21, 23, 27, 29);
form part of an ABS brake apparatus.

10. An apparatus (10) as claimed in Claim 9, **characterized by** comprising four ABS modulators.

11. An apparatus (10) as claimed in Claim 9, **characterized by** comprising three ABS modulators, i.e. two ABS modulators for the rear wheels, and one ABS modulator for both the front wheels.

12. An apparatus (10) as claimed in Claim 9, **characterized by** comprising two ABS modulators for the rear wheels.

13. An apparatus (10) as claimed in any one of Claims 1 to 8, **characterized in that**:
- said means (14) for braking the tractor and trailer, and for steer-by-braking (SBF) the tractor only; and
- said compressed-fluid modulators (18, 19, 24, 25) acting on said converting means (20, 22, 26, 28) and for activating tractor brakes (21, 23, 27, 29);
form part of a brake-by-wire brake apparatus.

14. An apparatus as claimed in any one of the preceding claims wherein the uphill stop detector (80, 90, 110) comprises an acceleration sensor (80), a tractor speed sensor (90) and/or a traveling direction sensor (110).

## Patentansprüche

1. Eine elektronisch gesteuerte Bremsvorrichtung (10) für Traktoren, wobei die Vorrichtung (10) Folgendes umfasst:
- Einrichtungen (10, 12, 13a, 13b, 15, C1, C2) zur Erzeugung und Verteilung eines Druckströmungsmmediums;
- Einrichtungen (14) zum Bremsen und zum Lenken durch Bremsen (SBF) des Traktors; und
- Druckströmungsmedium-Modulatoren (18, 19, 24, 25) zur Aktivierung der Traktor-Bremsen (21, 23, 27, 29); wobei die Modulatoren (18, 19, 24, 25) elektrisch mit einer elektronischen Bremsensteuerungs-Zentral-Steuereinheit (CNT) verbunden sind;
wobei die Vorrichtung (10) **dadurch gekennzeichnet ist, dass** sie weiterhin Folgendes umfasst:
- einen Hangaufwärts-Stopp-Detektor (80, 90, 110), der mit der elektronischen Zentral-Steuereinheit (CNT) verbunden ist, und
- eine Vorrichtung (DS) zur Lieferung von Hochdruck-Strömungsmedium an die hinteren Modulatoren (24, 25), wobei die Vorrichtung (DS) mit der elektronischen Zentral-Steuereinheit (CNT) verbunden und so konfiguriert ist, dass sie den maximalen Druck der Strömungsmittel-Zufuhr an die hinteren Modulatoren (24, 25) auswählt, wenn die Einrichtung (14) zum Bremsen nicht gedrückt ist, und der Hangaufwärts-Stopp-Detektor (80, 90, 110) feststellt, dass der Traktor hangaufwärts gestoppt ist.

2. Vorrichtung (10) nach Anspruch 1, **dadurch gekennzeichnet, dass** die Vorrichtung (DS) eine erste Leitung (CAP), ein normalerweise geschlossenes Ventil (50), eine zweite Leitung (70) und ein Vergleicher-Ventil (60) umfasst.

3. Vorrichtung (10) nach Anspruch 2, **dadurch gekennzeichnet, dass** das Vergleicher-Ventil (60) einen Zweig (RM2) in einen ersten und einen zweiten Teil (TR*, TR**) aufteilt, wobei das Vergleicher-Ventil (60) den momentanen Strömungsmittel-Druck an einem ersten Punkt (P1) entlang des ersten Teils (TR*) und den momentanen Strömungsmittel-Druck an einem zweiten Punkt (P2) entlang der zweiten Leitung (70) feststellt; wobei das Vergleicher-Ventil (60) die Drücke an den ersten und zweiten Punkten (P1, P2) vergleicht und sich auf der Seite des höheren der zwei Drücke öffnet; das heißt, bei der Feststellung eines höheren Druckes an dem zweiten Punkt (P2) als an dem ersten Punkt (P1), das Vergleicher-Ventil (60) sich auf der Seite der zweiten Leitung (70) öffnet, um die zweite Leitung (70) mit dem zweiten Teil (TR**) zu verbinden; und umgekehrt, bei der Feststellung eines höheren Druckes an dem ersten Punkt (P1) als an dem zweiten Punkt (P2) das Vergleicher-Ventil (60) sich auf der Seite des ersten Teils (TR*) öffnet, um den ersten Teil (TR*) mit dem zweiten Teil (TR**) zu verbinden.

4. Vorrichtung (10) nach einem der vorhergehenden Ansprüche, **dadurch gekennzeichnet, dass** die Modulatoren (18, 19, 24, 25) auf pneumatisch/hydraulische Wandler-Einrichtungen (20, 22, 26, 28) einwirken, die die ankommende Energie in Form von komprimierter Luft in hydraulische Energie zur Leistungsversorgung entsprechender Bremsen (21, 23, 27, 29) umwandeln.

5. Vorrichtung (10) nach einem der vorhergehenden Ansprüche, **dadurch gekennzeichnet, dass** sie weitere Einrichtungen (16, 30, BTG) zum Bremsen lediglich eines Anhängers umfasst, wobei die weiteren Einrichtungen (16, 30, BTG) eine normalerweise eingeschaltete Ventileinrichtung (30) umfassen, die normalerweise ein gleichzeitiges Bremsen des Traktors und des Anhängers ermöglicht; wobei die Ventileinrichtung (30) durch die elektronische zentrale Steuereinheit (CNT) gesteuert wird, um in den Abschaltzustand zu schalten, wenn die Lenken durch Bremsen-Funktion (SBF) aktiviert ist.

6. Vorrichtung (10) nach einem der vorhergehenden Ansprüche, **dadurch gekennzeichnet, dass** die elektronische Zentral-Steuereinheit (CNT) die Modulatoren (18, 19, 24, 25) steuert.

7. Vorrichtung (10) nach einem der vorhergehenden Ansprüche, **dadurch gekennzeichnet, dass** die elektronische Zentral-Steuereinheit (CNT) Signale erfasst und verarbeitet, die die momentanen Geschwindigkeiten der Traktorräder anzeigen.

8. Vorrichtung (10) nach Anspruch 7, **dadurch gekennzeichnet, dass** die die momentanen Geschwindigkeiten der Traktorräder anzeigenden Signale von einer Anzahl von Sensoren (SS1, SS2, SS3, SS4) geliefert werden, die jeweils an einem jeweiligen Rad angeordnet sind.

9. Vorrichtung (10) nach einem der vorhergehenden Ansprüche, **dadurch gekennzeichnet, dass**:
- die Einrichtungen (14) zum Bremsen des Traktors und Anhängers, und zum Lenken durch Bremsen lediglich des Traktors; und
- die Druckströmungsmedium-Modulatoren (18, 19, 24, 25), die auf die Wandlereinrichtungen (20, 22, 26, 28) und zur Aktivierung der Traktor-Bremsen (21, 23, 27, 29) einwirken;
einen Teil einer ABS-Bremsvorrichtung bilden.

10. Vorrichtung (10) nach Anspruch 9, **dadurch gekennzeichnet, dass** sie vier ABS-Modulatoren umfasst.

11. Vorrichtung (10) nach Anspruch 9, **dadurch gekennzeichnet, dass** sie drei ABS-Modulatoren umfasst, nämlich zwei ABS-Modulatoren für die Hinterräder und einen ABS-Modulator für die beiden Vorderräder.

12. Vorrichtung (10) nach Anspruch 9, **dadurch gekennzeichnet, dass** sie zwei ABS-Modulatoren für die Hinterräder umfasst.

13. Vorrichtung (10) nach einem der Ansprüche 1 bis 8, **dadurch gekennzeichnet, dass**:
- die Einrichtungen (14) zum Bremsen des Traktors und des Anhängers, und zum Lenken durch Bremsen (SBF) lediglich des Traktors; und
- die Druckströmungsmedium-Modulatoren (18, 19, 24, 25), die auf die Wandlereinrichtungen (20, 22, 26, 28) einwirken und zur Aktivierung der Traktor-Bremsen (21, 23, 27, 29) dienen;
Teil einer drahtgebundenen Bremsvorrichtung bilden.

14. Vorrichtung (10) nach einem der vorhergehenden Ansprüche, bei der der Hangaufwärts-Stopp-Detektor (80, 90, 110) einen Beschleunigungssensor (80), einen Traktor-Geschwindigkeits-Sensor (90) und/oder einen Fahrtrichtungs-Sensor (110) umfasst.

## Revendications

1. Appareil de freinage à commande électronique (10) pour des tracteurs, l'appareil (10) comprenant :
- des dispositifs (11, 12, 13a, 13b, 15, C1, C2) conçus pour produire et distribuer un fluide comprimé,
- des dispositifs (14) conçus pour freiner et assurer une fonction de direction et freinage (steer-by-braking - SBF) sur le tracteur, et
- des dispositifs de modulation de fluide sous pression (18, 19, 24, 25) conçus pour actionner les freins pour le tracteur (21, 23, 27, 29), lesdits dispositifs de modulation (18, 19, 24, 25) étant connectés électriquement à une unité de commande centrale électronique de frein (CNT), et l'appareil (10) étant **caractérisé en ce qu'**il comprend également :
- un détecteur d'arrêt de montée (80, 90, 110) couplé à l'unité de commande centrale électronique (CNT), et
- un dispositif (DS) pour alimenter en fluide sous pression des dispositifs de modulation arrière (24, 25), le dispositif (DS) étant couplé à l'unité de commande centrale électronique (CNT) et étant conçu pour sélectionner la pression maximale de fluide fourni aux dispositifs de modulation arrière (24, 25) lorsque le dispositif de freinage (14) n'est pas appuyé et que le détecteur d'arrêt en montée (80, 90, 110) détecte que le tracteur est arrêté par la montée.

2. Appareil (10) selon la revendication 1, **caractérisé en ce que** ledit dispositif (DS) comprend une première ligne (CAP), une soupape normalement fermée (50), une seconde ligne (70), et une soupape de comparaison (60).

3. Appareil (10) selon la revendication 2, **caractérisé en ce que** ladite soupape de comparaison (60) divise une branche (RM2) en un premier et un second tronçons (TR*, TR**), ladite soupape de comparaison (60) déterminant la pression du fluide instantanée à un premier point (P1) le long du premier tronçon (TR*), et la pression de fluide instantanée à un second point (P2) le long de la seconde ligne (70), et ladite soupape de comparaison (60) comparant les pressions aux premier et second points (P1, P2), et ouvrant sur le côté de la plus élevée des deux pressions, c'est-à-dire, lorsqu'elle détermine une pression plus élevée au second point (P2) qu'au premier point (P1), la soupape de comparaison (60) ouvre sur le côté de la seconde ligne (70) pour connecter la seconde ligne (70) au second tronçon (TR**), et inversement, si elle détermine une pression au premier point (P1) plus élevée qu'au second point (P2), la soupape de comparaison (60) ouvre sur le côté du premier tronçon (TR*) pour connecter le premier tronçon (TR*) au second tronçon (TR**).

4. Appareil (10) selon l'une quelconque des revendications précédentes, **caractérisé en ce que** lesdits dispositifs de modulation de fluide sous pression (18, 19, 24, 25) agissent sur des moyens de conversion pneumatique/hydraulique (20, 22, 26, 28) qui transforment l'énergie entrante, sous forme d'air comprimé, en énergie hydraulique pour actionner les freins correspondants (21, 23, 27, 29).

5. Appareil (10) selon l'une quelconque des revendications précédentes, **caractérisé en ce qu'**il comprend des moyens supplémentaires (16, 30, BTG) pour freiner une remorque uniquement, lesdits moyens supplémentaires (16, 30, BTG) comprenant un dispositif de soupape normalement ouvert (ON) (30) permettant en position normale un freinage simultané du tracteur et de la remorque, ledit dispositif de soupape (30) étant commandé par ladite unité de commande centrale électronique (CNT) pour le commuter en position fermée (OFF) lorsque la fonction de direction au freinage (SBF) est activée.

6. Appareil (10) selon l'une quelconque des revendications précédentes, **caractérisé en ce que** ladite unité de commande centrale électronique (CNT) commande lesdits modulateurs (18, 19, 24, 25).

7. Appareil (10) selon l'une quelconque des revendications précédentes, **caractérisé en ce que** ladite unité de commande centrale électronique (CNT) acquiert et traite les signaux indiquant les vitesses instantanées des roues du tracteur.

8. Appareil (10) selon la revendication 7, **caractérisé en ce que** lesdits signaux indiquant les vitesses instantanées des roues du tracteur sont fournies par plusieurs capteurs (SS1, SS2, SS3, SS4), situés chacun au niveau d'une roue respective.

9. Appareil (10) selon l'une quelconque des revendications précédentes, **caractérisé en ce que** :
- lesdits dispositifs (14) pour freiner le tracteur et la remorque, et pour diriger au freinage (SBF) le tracteur uniquement, et
- lesdits dispositifs de modulation de fluide sous pression (18, 19, 24, 25) agissant sur lesdits moyens de conversion (20, 22, 26, 28) et pour actionner les freins du tracteur (21, 23, 27, 29) forment une partie intégrante d'un dispositif de freinage ABS.

10. Appareil (10) selon la revendication 9, **caractérisé en ce qu'**il comprend quatre dispositifs de modulation ABS.

11. Appareil (10) selon la revendication 9, **caractérisé en ce qu'**il comprend deux dispositifs de modulation ABS, c'est-à-dire deux dispositifs de modulation ABS pour les roues arrière, et un dispositif de modulation ABS pour les deux roues avant.

12. Appareil (10) selon la revendication 9, **caractérisé en ce qu'**il comprend deux dispositifs de modulation ABS pour les roues arrière.

13. Appareil (10) selon l'une quelconque des revendications 1 à 8, **caractérisé en ce que** :
- lesdits dispositifs (14) pour freiner le tracteur et la remorque, et pour diriger au freinage (SBF) le tracteur uniquement, et
- lesdits dispositifs de modulation de fluide sous pression (18, 19, 24, 25) agissant sur lesdits moyens de conversion (20, 22, 26, 28) et pour actionner les freins du tracteur (21, 23, 27, 29)
forment une partie intégrante d'un dispositif de freinage ABS.

14. Appareil selon l'une quelconque des revendications précédentes, **caractérisé en ce que** le détecteur d'arrêt en montée (80, 90, 110) comprend un capteur d'accélération (80), un capteur de vitesse de tracteur (90) et/ou un capteur de direction de déplacement (110).
